# EUROPEAN PATENT APPLICATION

(11) **EP 4 624 782 A1**
(43) Date of publication of application: **01.10.2025**
(21) Application number: 24778625.4
(22) Date of filing: 26.01.2024
(51) Int. Cl.: F16H 57/04, B60L 15/20, H02K 9/19

(54) **VEHICULAR DRIVING DEVICE**

(30) Priority: 30.03.2023 JP 2023055351
(71) Applicant: AISIN CORPORATION, Kariya-shi, Aichi 448-8650 (JP)
(72) Inventor: ONOUCHI, Tomohiro, Kariya-shi, Aichi 448-8650 (JP); YAMAKAWA, Sho, Kariya-shi, Aichi 448-8650 (JP); HAMAGUCHI, Hiroshi, Kariya-shi, Aichi 448-8650 (JP)
(74) Representative: Kramer Barske Schmidtchen Patentanwälte PartG mbB
(86) International application number: PCT/JP2024/002370
(87) International publication number: WO 2024/202479

(57) **Abstract**

A control device executes first discharge control for causing a pump to operate for a prescribed first discharge time (T1) on condition that a main power source has been switched from off to on and the vehicle speed has reached at least a prescribed vehicle speed threshold value (Vx).

## Description

### TECHNICAL FIELD

The present invention relates to a vehicular driving device mounted on an electric vehicle.

### BACKGROUND ART

An example of such a vehicular driving device is disclosed in JP 2022-154736 A (Patent Literature 1).

In the vehicular driving device described in Patent Literature 1, an electric oil pump is operated at the maximum output when a power source is started. As a result, oil is supplied to a bearing provided inside a driving device in order to avoid insufficient lubrication of the bearing at the time of starting the power source.

### CITATIONS LIST

### PATENT LITERATURE

Patent Literature 1: JP 2022-154736 A

### SUMMARY OF INVENTION

### TECHNICAL PROBLEMS

However, in the vehicular driving device described above, the electric oil pump is operated at the maximum output every time the power source is started. Therefore, power consumption for operating the electric oil pump tends to increase, and energy efficiency of the entire driving device tends to decrease. In addition, since the electric oil pump is operated at the maximum output at the time of starting the power source, the load of the electric oil pump tends to increase, and the product life tends to be shortened. In addition, in a case where an electric oil pump having a structure that can withstand such a load is used, the cost of the electric oil pump tends to be high.

Therefore, it is desired to realize a vehicular driving device that can secure a necessary product life while suppressing cost and that can easily increase energy efficiency.

### SOLUTIONS TO PROBLEMS

A vehicular driving device mounted on an electric vehicle, the vehicular driving device including:
a rotary electric machine including a rotor as a drive power source of a wheel;
a case that accommodates the rotary electric machine and oil;
a pump that is driven by a drive source different from the rotary electric machine and sucks and discharges oil in the case;
an oil supply passage that supplies oil discharged from the pump to at least a rotor bearing that rotatably supports the rotor; and
a control device that controls the pump,
in which
the control device includes a power source state acquisition unit that acquires information indicating an on or off state of a main power source of the electric vehicle, and a vehicle speed acquisition unit that acquires information indicating a vehicle speed of the electric vehicle, and
the control device executes first discharge control for causing the pump to operate for a prescribed first discharge time on condition that the main power source has been switched from off to on and the vehicle speed has reached at least a prescribed vehicle speed threshold value.

According to the present configuration, the condition for operating the pump by the first discharge control includes not only the fact that the main power source has been switched from off to on, but also the fact that the vehicle speed has reached at least the vehicle speed threshold value. That is, the pump does not necessarily operate at the time of starting the power source, and does not operate unless the vehicle speed becomes high to some extent. Therefore, the operation time of the pump can be reduced. As a result, the energy consumption due to operation of the pump is reduced, and the energy efficiency of the vehicular driving device is easily increased. In addition, since the load of the pump can be reduced by limiting the period during which the pump operates, the necessity of using a pump having high durability can be reduced, and the cost of the pump can be easily suppressed low while securing the required product life. As described above, according to the present configuration, a vehicular driving device that can secure a necessary product life while suppressing cost and that can easily increase energy efficiency can be realized.

Further features and advantages of the technology according to the present disclosure will become more apparent from the following description of exemplary and non-limiting embodiments, which will be described with reference to the drawings.

### BRIEF DESCRIPTION OF DRAWINGS

FIG. 1 is a skeleton diagram of a vehicular driving device.
FIG. 2 is a partial cross-sectional view in an axial direction of the vehicular driving device.
FIG. 3 is a control block diagram.
FIG. 4 is a flowchart of first discharge control.
FIG. 5 is a flowchart of second discharge control.
FIG. 6 is a time chart illustrating a relationship between a vehicle speed of an electric vehicle and an on or off state of a pump.
FIG. 7 is a diagram illustrating a relationship between a temperature of oil and a discharge time of the oil by the pump.

### DESCRIPTION OF EMBODIMENTS

A vehicular driving device according to the present disclosure is mounted on an electric vehicle. Hereinafter, an embodiment of the vehicular driving device will be described by exemplifying a vehicular driving device having three-axis configuration in which respective components are arranged in three virtual axes parallel to each other.

Hereinafter, a direction parallel to each axis (first axis A1, second axis A2, and third axis A3) described above is referred to as an "axial direction L". Further, one side in the axial direction L is referred to as a "first side L1 in the axial direction", and the other side is referred to as a "second side L2 in the axial direction". In addition, a "radial direction R", the "inside in the radial direction R", and the "outside in the radial direction R" may be defined with reference to each axis described above.

Note that in the present application, "driving connection" refers to a state in which two rotary elements are connected so as to be able to transmit drive power, and includes a state in which the two rotary elements are connected so as to rotate integrally, or a state in which the two rotary elements are connected so as to be able to transmit drive power via one or at least two transmission members. As such transmission members, various members that transmit rotation at the same speed or at a variable speed, such as a shaft, a gear mechanism, a belt, and a chain are included. Note that as the transmission member, an engagement device that selectively transmits rotation and drive power, for example, a friction engagement device, a meshing engagement device, or the like may be included.

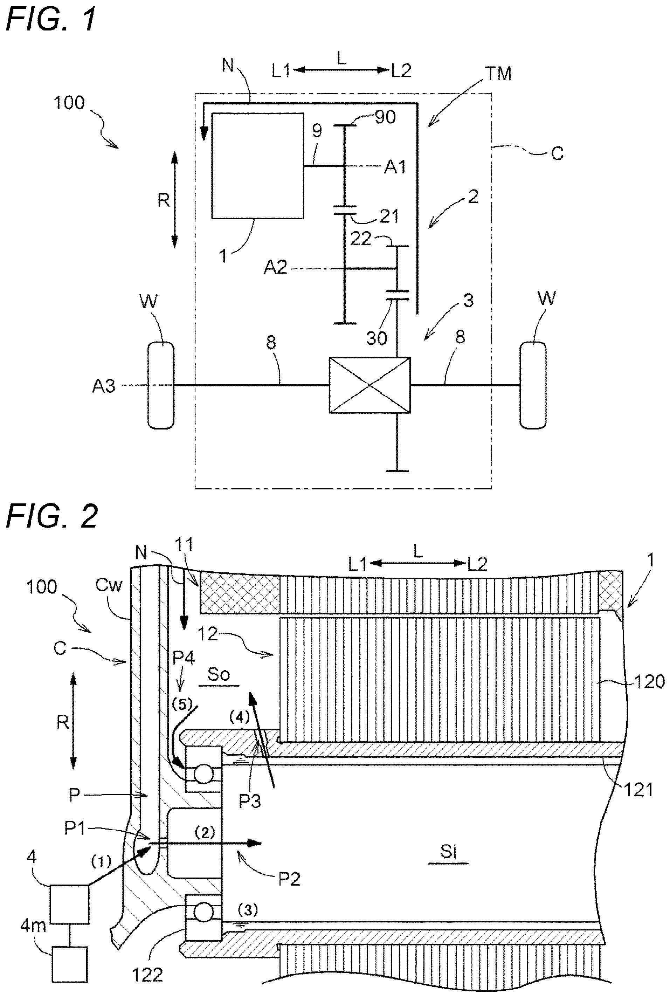

As illustrated in FIGS. 1 and 2, a vehicular driving device 100 includes a rotary electric machine 1 as a drive power source of wheels W, a power transmission mechanism TM, and a case C that accommodates the rotary electric machine 1 and the power transmission mechanism TM.

In the present embodiment, the rotary electric machine 1 is disposed on the first axis A1. The rotary electric machine 1 includes a stator 11 and a rotor 12. The stator 11 is fixed to the case C. In the present embodiment, the rotor 12 is disposed inside the stator 11 in the radial direction R. The rotor 12 includes a rotor core 120, a rotor shaft 121 that is disposed inside the rotor core 120 in the radial direction R and extends in the axial direction L, and a rotor bearing 122 that rotatably supports the rotor shaft 121 with respect to the case C. In the present embodiment, the rotor bearing 122 is configured to support a portion of the rotor shaft 121 on the first side L1 in the axial direction with respect to the rotor core 120. A portion of the rotor shaft 121 on the second side L2 in the axial direction with respect to the rotor core 120 is connected to the power transmission mechanism TM. In the present embodiment, the rotor shaft 121 is drivingly connected to output members 8 so as to always rotate in conjunction with the output members 8 drivingly connected to the wheels W. In addition, in the present embodiment, the rotor shaft 121 is a rotating member that rotates fastest among the rotating members constituting a power transmission path from the rotary electric machine 1 to the wheels W during traveling of the electric vehicle.

The rotor shaft 121 is drivingly connected to an input member 9. The input member 9 is provided with an input gear 90. As the rotor shaft 121 rotates, the input member 9 and the input gear 90 rotate. In the present embodiment, the input member 9 is disposed on the second side L2 in the axial direction with respect to the rotary electric machine 1. That is, the drive power generated by the rotary electric machine 1 is transmitted to the second side L2 in the axial direction with respect to the rotary electric machine 1.

The power transmission mechanism TM includes a plurality of gears that mesh with each other, and is configured to transmit the drive power generated by the rotary electric machine 1 to the wheels W. The vehicular driving device 100 includes the output members 8 drivingly connected to the wheels W, and the power transmission mechanism TM transmits a drive power between the rotary electric machine 1 and the output members 8. In the present embodiment, the power transmission mechanism TM is configured to transmit the drive power generated by the rotary electric machine 1 on the second side L2 in the axial direction with respect to the rotary electric machine 1. In the present example, the power transmission mechanism TM includes a counter gear mechanism 2 and a differential gear mechanism 3. The counter gear mechanism 2 and the differential gear mechanism 3 are disposed on the second side L2 in the axial direction with respect to the rotary electric machine 1. Note that the power transmission mechanism TM may include engagement elements such as a clutch and brakes.

In the present embodiment, the counter gear mechanism 2 is disposed on the second axis A2. The counter gear mechanism 2 includes a first counter gear 21 and a second counter gear 22. The first counter gear 21 and the second counter gear 22 are connected to the same shaft member, and are disposed at different positions in the axial direction L in the shaft member. In the illustrated example, the first counter gear 21 is disposed on the first side L1 in the axial direction with respect to the second counter gear 22.

In the present embodiment, the first counter gear 21 is configured to have a larger diameter than that of the second counter gear 22. The first counter gear 21 meshes with the input gear 90. The second counter gear 22 meshes with a differential input gear 30 described later.

The differential gear mechanism 3 is drivingly connected to the wheels W via the output members 8. In the present embodiment, the differential gear mechanism 3 is drivingly connected to the pair of wheels W, and is configured to distribute the drive power generated by the rotary electric machine 1 to the pair of wheels W. The output member 8 is drivingly connected to the wheel W via, for example, a drive shaft, not illustrated. The output member 8 is, for example, the same member as the gear constituting the differential gear mechanism 3, or a member constituting a connection shaft that connects the differential gear mechanism and the drive shaft.

The differential gear mechanism 3 includes the differential input gear 30 and a plurality of bevel gears that mesh with each other. The differential input gear 30 meshes with the second counter gear 22 of the counter gear mechanism 2. The drive power input via the differential input gear 30 is distributed and transmitted to the pair of wheels W via the pair of output members 8.

In the present embodiment, at least part of the plurality of gears provided in the power transmission mechanism TM are configured to scrape up oil in the case C. For example, the oil in the case C is scraped up by the differential input gear 30. The scraped oil is supplied to the rotor bearing 122 through a second oil supply passage N described later.

Thus, in the present embodiment,
the power transmission mechanism TM including the plurality of gears that mesh with each other and configured to transmit drive power generated by the rotary electric machine 1 to the wheels W is provided,
the rotor 12 includes the rotor core 120 and the rotor shaft 121, and
assuming that the direction in which the rotor shaft 121 extends is the axial direction L, one side in the axial direction L is the first side L1 in the axial direction, and the other side in the axial direction L is the second side L2 in the axial direction,
a portion of the rotor shaft 121 on the second side L2 in the axial direction with respect to the rotor core 120 is connected to the power transmission mechanism TM, and
the rotor bearing 122 is configured to support a portion of the rotor shaft 121 on the first side L1 in the axial direction with respect to the rotor core 120.

According to the present configuration, in the rotor shaft 121, the connection portion with the power transmission mechanism TM and the portion where the rotor bearing 122 is disposed are disposed on opposite sides in the axial direction L. As a result, the drive power of the rotary electric machine 1 generated with rotation of the rotor shaft 121 can be appropriately output to the power transmission mechanism TM while appropriately supporting the rotor shaft 121 by the rotor bearing 122.

As illustrated in FIG. 2, the vehicular driving device 100 includes a pump 4 that sucks and discharges oil in the case C, and an oil supply passage P that supplies the oil discharged by the pump 4 to at least the rotor bearing 122. The pump 4 is driven by a drive source 4m different from the rotary electric machine 1 described above. In the present embodiment, the pump 4 is an electric pump driven by an electric motor as the drive source 4m.

The oil supply passage P is a path through which oil flows from the pump 4 to the rotor bearing 122. Here, the oil supply passage P is a first oil supply passage P. In the present embodiment, the first oil supply passage P includes a first oil passage P1, a second oil passage P2, a third oil passage P3, and a fourth oil passage P4. When the pump 4 operates, the oil discharged from the pump 4 flows through the first oil passage P1, the second oil passage P2, the third oil passage P3, and the fourth oil passage P4 in this order and reaches the rotor bearing 122. The oil that has reached the rotor bearing 122 is used to lubricate at least the rotor bearing 122.

As illustrated in FIG. 2, the case C includes a wall portion Cw (here, an end wall portion on the first side L1 in the axial direction) that covers the rotary electric machine 1 from the first side L1 in the axial direction and extends in the radial direction R.

In the present embodiment, the first oil passage P1 is provided in the wall portion Cw of the case C. The second oil passage P2 communicates with the first oil passage P1. In the present example, the second oil passage P2 includes an opening that opens in the surface on the second side L2 in the axial direction of the wall portion Cw, and an internal space (intra-shaft space Si) of the rotor shaft 121. The third oil passage P3 communicates with the second oil passage P2. In the present example, the third oil passage P3 penetrates part of the rotor shaft 121 in the radial direction R. The fourth oil passage P4 communicates with the third oil passage P3 and communicates with the rotor bearing 122. In the present example, the fourth oil passage P4 includes an external space (extra-shaft space So) of the rotor shaft 121 and a path formed along the wall portion Cw from the extra-shaft space So to the rotor bearing 122.

In the present embodiment, the oil discharged from the pump 4 reaches the rotor bearing 122 in the following order (1) to (5).
(1) The oil discharged from the pump 4 flows through the first oil passage P1.
(2) The oil flows from the first oil passage P1 to the second oil passage P2.
(3) The oil in the second oil passage P2 is at least temporarily stored in the intra-shaft space Si.
(4) The oil stored in the intra-shaft space Si is injected into the fourth oil passage P4 (the extra-shaft space So) via the third oil passage P3 by the action of the centrifugal force accompanying rotation of the rotor shaft 121.
(5) The oil injected into the extra-shaft space So reaches the rotor bearing 122 along the wall portion Cw of the case C.

Note that regardless of the above order (1) to (5), the oil discharged from the pump 4 may reach the rotor bearing 122. For example, the oil stored in the intra-shaft space Si may directly reach the rotor bearing 122. In addition, the oil flowing through the first oil passage P1 includes, in addition to the oil branching and flowing into the second oil passage P2, oil flowing directly outward in the radial direction R through the first oil passage P1. Such oil is supplied to the rotary electric machine 1 from the outside in the radial direction R, and is used for cooling the rotary electric machine 1. The oil after cooling the rotary electric machine 1 reaches the fourth oil passage P4, and can flow through the fourth oil passage P4 to reach the rotor bearing 122.

As described above, the pump 4 according to the present embodiment can be used not only for cooling the rotary electric machine 1 but also for lubricating the rotor bearing 122 that supports the rotor shaft 121 of the rotary electric machine 1. As described above, in the present embodiment, the rotor bearing 122 is configured to support the end portion of the rotor shaft 121 on the first side L1 in the axial direction. Therefore, the oil discharged from the pump 4 is mainly supplied to the portion of the rotary electric machine 1 on the first side L1 in the axial direction. On the other hand, the oil is supplied to the portion on the second side L2 in the axial direction with respect to the rotary electric machine 1, that is, the power transmission mechanism TM by scraping up the oil in the case C by a rotating member (for example, a gear such as the differential input gear 30) constituting the power transmission mechanism TM. With such a configuration, the portion to which oil is supplied by the pump 4 can be limited, and an operation load of the pump 4 can be reduced. The portion to which oil is supplied by scraping the oil includes a bearing (hereinafter, referred to as a "target bearing") other than the rotor bearing 122. The target bearing includes, for example, a bearing that rotatably supports a portion of the rotor shaft 121 disposed on the second side L2 in the axial direction with respect to the rotor core 120. In the present embodiment, the target bearing includes a bearing that rotatably supports the output member 8 on the first side L1 in the axial direction.

In the present embodiment, the vehicular driving device 100 includes a second oil supply passage N that supplies oil scraped up by a gear (for example, the differential input gear 30) provided in the power transmission mechanism TM to the rotor bearing 122. In the present example, the oil scraped up by the gear of the power transmission mechanism TM on the second side L2 in the axial direction with respect to the rotary electric machine 1 passes through the outside in the radial direction R with respect to the rotary electric machine 1 (see FIG. 1), reaches the first side L1 in the axial direction with respect to the rotary electric machine 1, and reaches the rotor bearing 122 along the inner wall of the case C facing the rotary electric machine 1 on the first side L1 in the axial direction (see FIG. 2). The second oil supply passage N is formed along such a flow of oil. The second oil supply passage N includes at least one of an opening penetrating the case C, a closed or open path formed in a wall surface of the case C, and a path formed by a tube that is a separate member from the case C. In addition, it is also preferable that the second oil supply passage N include a catch tank that temporarily stores oil scraped up by the gear of the power transmission mechanism TM.

Thus, in the present embodiment,
the oil supply passage P is the first oil supply passage P,
at least part of the plurality of gears are configured to scrape up oil in the case C, and
the second oil supply passage N that supplies the oil scraped up by the gears to the rotor bearing 122 is provided.

According to the present configuration, both the oil flowing through the first oil supply passage P by the power of the pump 4 and the oil flowing through the second oil supply passage N by scraping up by the gear of the power transmission mechanism TM can be supplied to the rotor bearing 122. Therefore, it is easy to appropriately lubricate the rotor bearing 122.

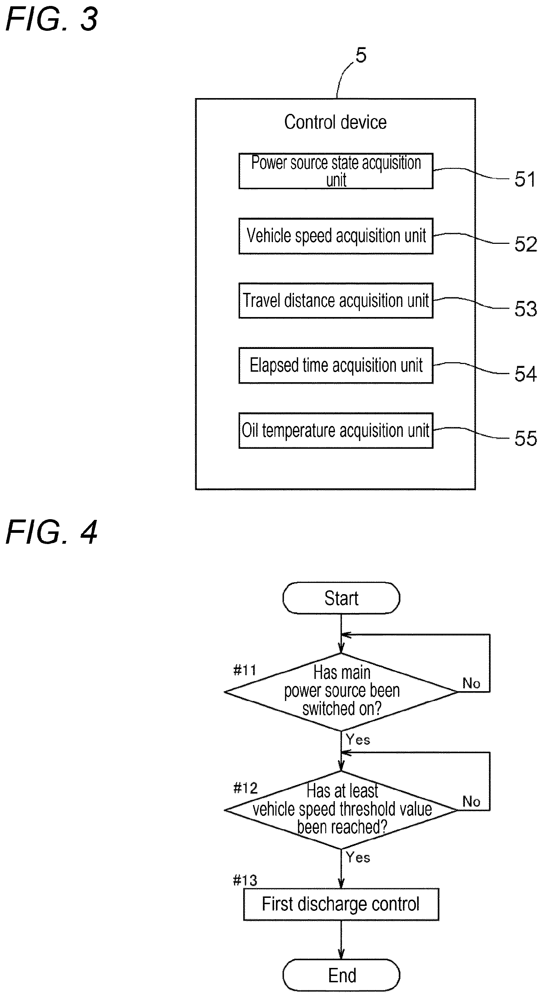

As illustrated in FIG. 3, the vehicular driving device 100 includes a control device 5 that controls the pump 4. The control device 5 includes an arithmetic processing device such as a central processing unit (CPU) and a storage device such as a random access memory (RAM) and a read only memory (ROM) that can be referred to by the arithmetic processing device. Then, each function (function of each functional unit described later) of the control device 5 is realized by software (program) stored in the storage device, hardware such as a separately provided arithmetic circuit, or both. The arithmetic processing device included in the control device 5 operates as a computer that executes each program.

The electric vehicle includes various sensors, and the control device 5 is configured to be able to acquire detection information of the various sensors. The functional units (see FIG. 3) that are provided in the control device 5 and acquire various types of information acquire necessary information on the basis of detection information of the sensors. Note that the plurality of functional units (51 to 55) included in the control device 5 are at least conceptually distinguished as illustrated in FIG. 3, and are not necessarily physically distinguished. In addition, the plurality of functional units included in the control device 5 need not be realized by common hardware, and may be separately realized by a plurality of pieces of hardware that can communicate with each other.

The control device 5 controls operation of the pump 4 by controlling drive of the drive source 4m. The control device 5 includes a power source state acquisition unit 51 that acquires information indicating an on or off state of a main power source (for example, a main switch or an ignition switch) of the electric vehicle, and a vehicle speed acquisition unit 52 that acquires information indicating a vehicle speed of the electric vehicle. The vehicle speed acquisition unit 52 may have a configuration to acquire information regarding an index (for example, the rotation speed of the output member 8 or the member that rotates integrally with the output member 8) that changes according to the vehicle speed, other than the configuration to acquire information regarding the vehicle speed itself.

In the present embodiment, the control device 5 further includes a travel distance acquisition unit 53 that acquires information indicating a travel distance of the electric vehicle, and an elapsed time acquisition unit 54 that acquires information indicating an elapsed time. The elapsed time acquisition unit 54 is a functional unit that acquires information regarding the time elapsed from the occurrence or the end of a certain event. In the present example, as will be described later, the elapsed time acquisition unit 54 is configured to acquire information regarding the elapsed time from the end of operation of the pump 4. In addition, in the present embodiment, the control device 5 further includes an oil temperature acquisition unit 55 that acquires information indicating the temperature of the oil in the case C.

The control device 5 is configured to be able to execute first discharge control and second discharge control. The first discharge control is executed on condition that a first discharge condition is satisfied. The second discharge control is executed on condition that a second discharge condition is satisfied. Here, "execute on condition that" includes both a configuration in which the control is executed in a case where the condition is satisfied and a configuration in which the control is executed in a case where another condition is satisfied in addition to the condition.

The first discharge control will be described with reference to FIG. 4.

The first discharge condition for performing the first discharge control is that the main power source has been switched from off to on and that the vehicle speed has reached at least a prescribed vehicle speed threshold value Vx.

As illustrated in FIG. 4, the control device 5 determines whether or not the main power source has been switched from off to on (step #11). This determination is made on the basis of a result of acquisition of information by the power source state acquisition unit 51.

In the case of determining that the main power source has been switched from off to on (step #11: Yes), the control device 5 determines whether or not the vehicle speed of the electric vehicle has reached the vehicle speed threshold value Vx (step #12). This determination is made on the basis of a result of acquisition of information by the vehicle speed acquisition unit 52. The vehicle speed threshold value Vx is set on the basis of the vehicle speed corresponding to the rotation speed of the rotor bearing 122. The vehicle speed threshold value Vx is a value set in advance by an experiment or the like. For example, the vehicle speed threshold value Vx may be set to a value (speed) at which it can be determined that the electric vehicle is accelerated by an artificial accelerator operation or the like from a state in which the electric vehicle is stopped or a state in which the electric vehicle creeps. Specifically, the vehicle speed threshold value Vx is set in a range of 10 km/h to 20 km/h. Preferably, the vehicle speed threshold value Vx is set to 15 km/h. However, the vehicle speed threshold value Vx can change according to the performance of each constituent member of the vehicular driving device 100, the performance of oil, the environment in which the electric vehicle is used, or the like.

In the case of determining that the vehicle speed of the electric vehicle has reached the vehicle speed threshold value Vx (step #12: Yes), the control device 5 executes the first discharge control (step #13).

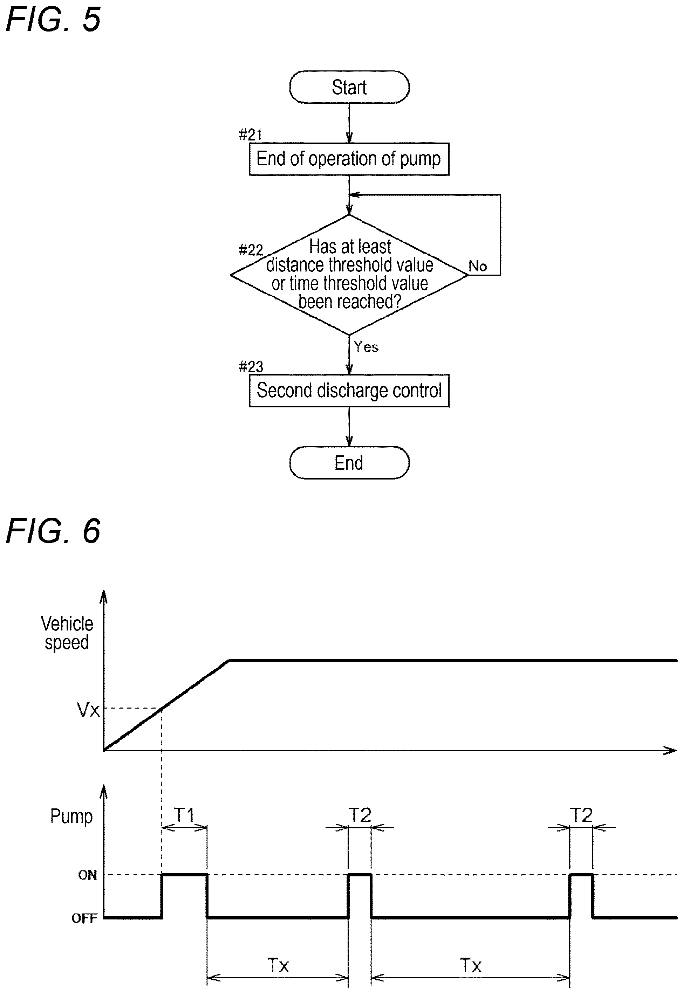

In the first discharge control, the control device 5 causes the pump 4 to operate for a prescribed first discharge time T1 (see also FIG. 6). Note that in FIG. 4, a case is assumed in which the first discharge control is executed in a case where the first discharge condition is satisfied, but in the present embodiment, operation of the pump 4 is prohibited in a case where the temperature of the oil is lower than an oil temperature threshold value Ox as described later. Therefore, in the present embodiment, the first discharge control is executed in a case where the condition that the temperature of the oil is at least the oil temperature threshold value Ox is satisfied in addition to satisfying the first discharge condition.

Next, the second discharge control will be described with reference to FIG. 5.

The second discharge condition for performing the second discharge control is at least one of that the travel distance has reached at least a prescribed distance threshold value after the end of the previous operation of the pump 4 and that the elapsed time has reached at least a prescribed time threshold value Tx after the end of the previous operation of the pump 4. That is, the second discharge control is executed by satisfying at least one of these. Note that the "previous operation of the pump 4" here does not include operation of the pump 4 before the main power source is switched on. In the present example, the second discharge condition is that the elapsed time (the time elapsed from the end of operation of the pump 4) has reached at least the prescribed time threshold value Tx.

As illustrated in FIG. 5, after the previous operation of the pump 4 is finished (step #21), the control device 5 determines whether or not a travel distance from the end of operation of the pump 4 has reached at least the prescribed distance threshold value, or whether or not an elapsed time from the end of operation of the pump 4 has reached at least the time threshold value Tx (step #22). In the present example, the control device 5 determines whether or not the elapsed time from the end of operation of the pump 4 has reached at least the time threshold value Tx. This determination is made on the basis of a result of acquisition of information by the elapsed time acquisition unit 54. The time threshold value Tx is a value set in advance by an experiment or the like. The time threshold value Tx is set to a value (time) at which no problem occurs even if oil is not supplied from the pump 4 to the rotor bearing 122 to be lubricated. For example, the time threshold value Tx is set in a range of 8 hours to 12 hours. Preferably, the time threshold value Tx is set to 10 hours. However, the time threshold value Tx can change according to the performance of each constituent member of the vehicular driving device 100, the performance of oil, the environment in which the electric vehicle is used, or the like.

In the case of determining that the elapsed time from the end of operation of the pump 4 has reached at least the time threshold value Tx (step #22: Yes), the control device 5 executes the second discharge control (step #23).

In the second discharge control, the control device 5 causes the pump 4 to operate for a prescribed second discharge time T2 (see also FIG. 6). Note that in FIG. 5, a case is assumed in which the second discharge control is executed in a case where the second discharge condition is satisfied, but in the present embodiment, operation of the pump 4 is prohibited in a case where the temperature of the oil is lower than the oil temperature threshold value Ox as described later. Therefore, in the present embodiment, the second discharge control is executed in a case where the condition that the temperature of the oil is at least the oil temperature threshold value Ox is satisfied in addition to satisfying the second discharge condition.

The second discharge control is repeatedly executed by satisfying the second discharge condition until the main power source has been switched from on to off. In other words, a first oil discharge after the main power source has been switched on is performed by the first discharge control, and second and subsequent oil discharges are performed by the second discharge control.

As described above, the vehicular driving device 100 includes:
the rotary electric machine 1 including the rotor 12 as the drive power source of the wheels W;
the case C that accommodates the rotary electric machine 1 and oil;
the pump 4 that is driven by the drive source 4m different from the rotary electric machine 1 and sucks and discharges oil in the case C;
the oil supply passage P that supplies oil discharged from the pump 4 to at least the rotor bearing 122 that rotatably supports the rotor 12; and
the control device 5 that controls the pump 4,
the control device 5 includes the power source state acquisition unit 51 that acquires information indicating an on or off state of the main power source (not illustrated) of the electric vehicle, and the vehicle speed acquisition unit 52 that acquires information indicating a vehicle speed of the electric vehicle, and
the control device 5 executes the first discharge control for causing the pump 4 to operate for the prescribed first discharge time T1 on condition that the main power source has been switched from off to on and the vehicle speed has reached at least the prescribed vehicle speed threshold value Vx.

According to the present configuration, the condition for operating the pump 4 by the first discharge control includes not only the fact that the main power source has been switched from off to on, but also the fact that the vehicle speed has reached at least the vehicle speed threshold value Vx. That is, the pump 4 does not necessarily operate at the time of starting the power source, and does not operate unless the vehicle speed becomes high to some extent. Therefore, the operation time of the pump 4 can be reduced. As a result, the energy consumption due to operation of the pump 4 is reduced, and the energy efficiency of the vehicular driving device 100 is easily increased. In addition, since the load of the pump 4 can be reduced by limiting the period during which the pump 4 operates, the necessity of using a pump having high durability can be reduced, and the cost of the pump 4 can be easily suppressed low while securing the required product life. As described above, according to the present configuration, the vehicular driving device 100 that can secure a necessary product life while suppressing cost and that can easily increase energy efficiency can be realized.

In addition, in the present embodiment,
the control device 5 further includes the travel distance acquisition unit 53 that acquires information indicating a travel distance of the electric vehicle and the elapsed time acquisition unit 54 that acquires information indicating an elapsed time, and
the control device 5 executes the second discharge control for causing the pump 4 to operate for the prescribed second discharge time T2 on condition at least one of that the travel distance has reached at least the prescribed distance threshold value after the end of the previous operation of the pump 4 and that the elapsed time has reached at least the prescribed time threshold value Tx after the end of the previous operation of the pump 4.

According to the present configuration, after the electric vehicle starts traveling, the oil discharged from the pump 4 can be periodically supplied to the rotor bearing 122. Therefore, the rotor bearing 122 can be appropriately lubricated even after the electric vehicle travels. In addition, according to the present configuration, the pump 4 is not always operated, but is operated for a prescribed time in a case where a certain condition is satisfied, so that the operation time of the pump 4 can be reduced.

FIG. 6 is a time chart illustrating a relationship between a vehicle speed of the electric vehicle and an on or off state of the pump.

As illustrated in FIG. 6, the main power source is switched from off to on from a state in which the electric vehicle is stopped, and the vehicle speed increases from zero. When the vehicle speed of the electric vehicle has reached at least the vehicle speed threshold value Vx, the control device 5 executes the first discharge control and operates the pump 4 for the first discharge time T1.

Then, the control device 5 stops the pump 4 after operating the pump 4 for the first discharge time T1. When the elapsed time from the end of operation of the pump 4 has reached at least the time threshold value Tx, the control device 5 executes the second discharge control, operates the pump 4 again, and continues this operation for the second discharge time T2.

In the present embodiment, the first discharge time T1 is set on the basis of the time until the oil discharged from the pump 4 reaches the rotor bearing 122 via the first oil supply passage P. In the present example, the first discharge time T1 is set longer than the second discharge time T2. In the first discharge control in which oil is discharged from the pump 4 for the first time after the main power source of the electric vehicle is switched on, the temperature of the oil is often lower than that when the electric vehicle is traveling, and the oil has a higher viscosity as the temperature is lower. Therefore, by setting the first discharge time T1, that is, the operation time of the pump 4 in the first discharge control to be longer than the second discharge time T2, the oil can easily reach the rotor bearing 122 appropriately even in a state in which the viscosity of the oil is high to some extent.

On the other hand, in the second discharge control performed after the discharge of the oil by the first discharge control, since the vehicular driving device 100 is already operating, the temperature of the oil tends to be higher than that at the time when the main power source is switched on. In this case, since the viscosity of the oil is relatively low, the oil easily reaches the rotor bearing 122 as compared with the case of performing the first discharge control. Therefore, the second discharge time T2 is set shorter than the first discharge time T1. As a result, the operation time of the pump 4 can be reduced. Therefore, the energy consumption by operating the pump 4 can be reduced to increase the energy efficiency of the vehicular driving device 100, and the load of the pump 4 can be reduced to secure a long product life.

As described above, in the present embodiment,
the vehicle speed threshold value Vx is set on the basis of a vehicle speed corresponding to a rotation speed of the rotor bearing 122, and
the first discharge time T1 is set on the basis of the time until the oil discharged from the pump 4 reaches the rotor bearing 122 via the oil supply passage P.

According to the present configuration, oil can be appropriately supplied to the rotor bearing 122 under necessary conditions. Therefore, insufficient lubrication of the rotor bearing 122 can be avoided.

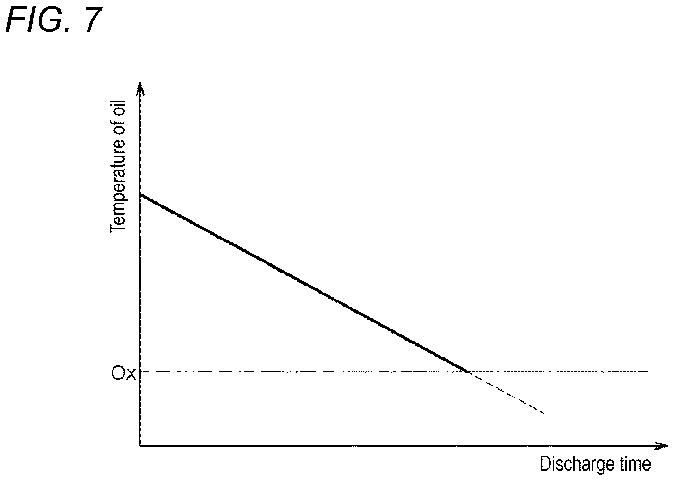

FIG. 7 illustrates a relationship between a temperature of oil and a discharge time of the oil by the pump.

As described above, the lower the temperature of oil, the higher the viscosity of the oil and the longer the time it takes for the oil to reach the rotor bearing 122 from the pump 4. In addition, when the temperature of oil is too low, the viscosity of the oil becomes significantly high. In this case, the load of the pump 4 becomes excessive, which causes shortening of the life of the pump 4.

Therefore, in the present embodiment,
the control device 5 further includes the oil temperature acquisition unit 55 that acquires information indicating the temperature of the oil in the case C (see FIG. 3), and
the control device 5
sets the first discharge time T1 longer as the temperature of the oil decreases in a case where the temperature of the oil is at least the prescribed oil temperature threshold value Ox, and
prohibits operation of the pump 4 in a case where the temperature of the oil is lower than the oil temperature threshold value Ox.

The oil temperature threshold value Ox is determined on the basis of the viscosity of the oil. That is, the oil temperature threshold value Ox is set to a temperature at which the viscosity of the oil becomes a value that can lead to failure of the pump 4. Depending on the performance of the oil, in the case of a general oil (for example, automatic transmission fluid (ATF)) used in a vehicular driving device, the oil temperature threshold value Ox is set in the range of minus 20 degrees to minus 30 degrees. For example, the oil temperature threshold value Ox may be set to minus 25 degrees.

As described above, in general, the viscosity of oil increases as the temperature of the oil decreases, and it becomes more difficult for the oil to flow through an oil passage as the viscosity increases. Therefore, as the temperature of the oil decreases, the time until the oil discharged from the pump 4 reaches the rotor bearing 122 becomes longer. According to the present configuration, since the first discharge time T1 is set longer as the temperature of the oil decreases, even oil having a low temperature and a high viscosity can be caused to appropriately reach the rotor bearing 122. On the other hand, the oil having a remarkably high viscosity due to too low temperature gives an excessive load to the pump 4 that discharges the oil, and tends to be a factor of shortening the life of the pump 4. According to the present configuration, in a case where the temperature of the oil is lower than the oil temperature threshold value Ox, operation of the pump 4 is prohibited, so that such an adverse effect can be avoided. Note that FIG. 7 exemplifies a case where the first discharge time T1 is set longer continuously as the temperature of the oil decreases. However, the first discharge time T1 may be set longer stepwise as the temperature of the oil decreases.

### [Other embodiments]

Next, other embodiments will be described.
(1) In the above embodiment, an example has been described in which the second discharge time T2 is set shorter than the first discharge time T1. However, the present invention is not limited to such an example, and the second discharge time T2 may be set longer than the first discharge time T1 or may be set to be the same as the first discharge time T1. In addition, similarly to the first discharge time T1, in a case where the temperature of the oil is at least the prescribed oil temperature threshold value Ox, the second discharge time T2 may be set longer as the temperature of the oil decreases.
(2) In the above embodiment, an example has been described in which in order to lubricate the rotor bearing 122, the control device 5 executes the first discharge control on condition that the first discharge condition is satisfied and executes the second discharge control on condition that the second discharge condition is satisfied. However, the control device 5 may cause the pump 4 to operate by satisfying another condition different from the above conditions. For example, the control device 5 may cause the pump 4 to operate in a case where a rotary electric machine cooling condition that is a condition for cooling the rotary electric machine 1 is satisfied. In this case, it is preferable that the vehicular driving device 100 include a sensor that detects the temperature of the rotary electric machine 1. For example, in a case where the temperature of the rotary electric machine 1 has reached at least a prescribed temperature threshold value, it is determined that the rotary electric machine cooling condition is satisfied. For example, the control device 5 executes third discharge control for causing the pump 4 to operate for a prescribed third discharge time on condition that the rotary electric machine cooling condition is satisfied.
(3) In the present embodiment, an example has been described in which the second discharge condition is that the elapsed time (the time elapsed from the end of operation of the pump 4) has reached at least the prescribed time threshold value Tx. However, the present invention is not limited to such an example, and the second discharge condition may be that the travel distance has reached at least a prescribed distance threshold value after the end of the previous operation of the pump 4. Alternatively, the second discharge condition may be satisfying both of the fact that the elapsed time has reached at least the time threshold value Tx and the fact that the travel distance has reached at least the distance threshold value.
(4) In the above embodiment, the vehicular driving device 100 having a three-axis configuration has been exemplified. However, the present invention is not limited to such an example, and the vehicular driving device 100 may have a one-axis configuration in which the components are coaxially arranged. In addition, the power transmission mechanism TM may include a planetary gear type reduction mechanism.
(5) Note that the configuration disclosed in the above-described embodiment can be applied in combination with the configuration disclosed in another embodiment as long as there is no contradiction. Regarding other configurations, the embodiments disclosed in the present specification are merely examples in all respects. Therefore, various modifications can be appropriately made without departing from the gist of the present disclosure.

### [Summary of present embodiment]

A summary of the embodiment of the vehicular driving device described above will be described below.

The vehicular driving device (100) mounted on an electric vehicle, the vehicular driving device (100) including:
the rotary electric machine (1) including the rotor (12) as the drive power source of the wheels (W);
the case (C) that accommodates the rotary electric machine (1) and oil;
the pump (4) that is driven by the drive source (4m) different from the rotary electric machine (1) and sucks and discharges oil in the case (C);
the oil supply passage (P) that supplies oil discharged from the pump (4) to at least the rotor bearing (122) that rotatably supports the rotor (12); and
the control device (5) that controls the pump (4),
in which
the control device (5) includes the power source state acquisition unit (51) that acquires information indicating an on or off state of a main power source of the electric vehicle, and the vehicle speed acquisition unit (52) that acquires information indicating a vehicle speed of the electric vehicle, and
the control device (5) executes first discharge control for causing the pump (4) to operate for the prescribed first discharge time (T1) on condition that the main power source has been switched from off to on and the vehicle speed has reached at least the prescribed vehicle speed threshold value (Vx).

According to the present configuration, the condition for operating the pump (4) by the first discharge control includes not only the fact that the main power source has been switched from off to on, but also the fact that the vehicle speed has reached at least the vehicle speed threshold value Vx. That is, the pump (4) does not necessarily operate at the time of starting the power source, and does not operate unless the vehicle speed becomes high to some extent. Therefore, the operation time of the pump (4) can be reduced. As a result, the energy consumption due to operation of the pump (4) is reduced, and the energy efficiency of the vehicular driving device (100) is easily increased. In addition, since the load of the pump (4) can be reduced by limiting the period during which the pump (4) operates, the necessity of using a pump having high durability can be reduced, and the cost of the pump (4) can be easily suppressed low while securing the required product life. As described above, according to the present configuration, the vehicular driving device (100) that can secure a necessary product life while suppressing cost and that can easily increase energy efficiency can be realized.

It is preferable that the control device (5) further include the travel distance acquisition unit (53) that acquires information indicating a travel distance of the electric vehicle and the elapsed time acquisition unit (54) that acquires information indicating an elapsed time, and
the control device (5) execute the second discharge control for causing the pump (4) to operate for the prescribed second discharge time (T2) on condition at least one of that the travel distance has reached at least the prescribed distance threshold value after the end of the previous operation of the pump (4) and that the elapsed time has reached at least the prescribed time threshold value (Tx) after the end of the previous operation of the pump (4).

According to the present configuration, after the electric vehicle starts traveling, the oil discharged from the pump (4) can be periodically supplied to the rotor bearing (122). Therefore, the rotor bearing (122) can be appropriately lubricated even after the electric vehicle travels. In addition, according to the present configuration, the pump (4) is not always operated, but is operated for a prescribed time in a case where a certain condition is satisfied, so that the operation time of the pump (4) can be reduced.

It is preferable that the control device (5) further include the oil temperature acquisition unit (55) that acquires information indicating the temperature of the oil in the case (C), and
the control device 5
set the first discharge time (T1) longer as the temperature of the oil decreases in a case where the temperature of the oil is at least the prescribed oil temperature threshold value (Ox), and
prohibit operation of the pump (4) in a case where the temperature of the oil is lower than the oil temperature threshold value (Ox).

As described above, in general, the viscosity of oil increases as the temperature of the oil decreases, and it becomes more difficult for the oil to flow through an oil passage as the viscosity increases. Therefore, as the temperature of the oil decreases, the time until the oil discharged from the pump (4) reaches the rotor bearing (122) becomes longer. According to the present configuration, since the first discharge time (T1) is set longer as the temperature of the oil decreases, even oil having a low temperature and a high viscosity can be caused to appropriately reach the rotor bearing (122). On the other hand, oil having a remarkably high viscosity due to too low temperature gives an excessive load to the pump (4) that discharges the oil, and tends to be a factor of shortening the life of the pump (4). According to the present configuration, in a case where the temperature of the oil is lower than the oil temperature threshold value (Ox), operation of the pump (4) is prohibited, so that such an adverse effect can be avoided.

It is preferable that the vehicle speed threshold value (Vx) be set on the basis of the vehicle speed corresponding to the rotation speed of the rotor bearing (122), and
the first discharge time (T1) be set on the basis of the time until the oil discharged from the pump (4) reaches the rotor bearing (122) via the oil supply passage (P).

According to the present configuration, oil can be appropriately supplied to the rotor bearing (122) under necessary conditions. Therefore, insufficient lubrication of the rotor bearing (122) can be avoided.

It is preferable that the power transmission mechanism (TM) including the plurality of gears that mesh with each other and configured to transmit drive power generated by the rotary electric machine (1) to the wheels (W) be provided,
the rotor (12) include the rotor core (120) and the rotor shaft (121), and
assuming that the direction in which the rotor shaft (121) extends is the axial direction (L), one side in the axial direction (L) is the first side (L1) in the axial direction, and the other side in the axial direction (L) is the second side (L2) in the axial direction,
a portion of the rotor shaft (121) on the second side (L2) in the axial direction with respect to the rotor core (120) be connected to the power transmission mechanism (TM), and
the rotor bearing (122) be configured to support a portion of the rotor shaft (121) on the first side (L1) in the axial direction with respect to the rotor core (120).

According to the present configuration, in the rotor shaft (121), the connection portion with the power transmission mechanism (TM) and the portion where the rotor bearing (122) is disposed are disposed on opposite sides in the axial direction (L). As a result, the drive power of the rotary electric machine (1) generated with rotation of the rotor shaft (121) can be appropriately output to the power transmission mechanism (TM) while appropriately supporting the rotor shaft (121) by the rotor bearing (122).

It is preferable that the oil supply passage (P) be the first oil supply passage (P), at least part of the plurality of gears be configured to scrape up the oil in the case (C), and
the second oil supply passage (N) that supplies oil scraped up by the gears to the rotor bearing (122) be provided.

According to the present configuration, both the oil flowing through the first oil supply passage (P) by the power of the pump (4) and the oil flowing through the second oil supply passage (N) by scraping up by the gears of the power transmission mechanism (TM) can be supplied to the rotor bearing (122). Therefore, it is easy to appropriately lubricate the rotor bearing (122).

### INDUSTRIAL APPLICABILITY

The technology according to the present disclosure can be used in a vehicular driving device mounted on an electric vehicle.

### REFERENCE SIGNS LIST

100: Vehicular driving device, 1: Rotary electric machine, 12: Rotor, 120: Rotor core, 121: Rotor shaft, 122: Rotor bearing, 4: Pump, 4m: Drive source, 5: Control device, 51: Power source state acquisition unit, 52: Vehicle speed acquisition unit, 53: Travel distance acquisition unit, 54: Elapsed time acquisition unit, 55: Oil temperature acquisition unit, C: Case, P: First oil supply passage (Oil supply passage), N: Second oil supply passage, TM: Power transmission mechanism, W: Wheel, T1: First discharge time, T2: Second discharge time, Tx: Time threshold value, Vx: Vehicle speed threshold value, Ox: Oil temperature threshold value, W: Wheel, L: Axial direction, L1: First side in axial direction, and L2: Second side in axial direction

## Claims

1. A vehicular driving device mounted on an electric vehicle, the vehicular driving device comprising:
a rotary electric machine including a rotor as a drive power source of a wheel;
a case that accommodates the rotary electric machine and oil;
a pump that is driven by a drive source different from the rotary electric machine and sucks and discharges oil in the case;
an oil supply passage that supplies oil discharged from the pump to at least a rotor bearing that rotatably supports the rotor; and
a control device that controls the pump,
wherein
the control device includes a power source state acquisition unit that acquires information indicating an on or off state of a main power source of the electric vehicle, and a vehicle speed acquisition unit that acquires information indicating a vehicle speed of the electric vehicle, and
the control device executes first discharge control for causing the pump to operate for a prescribed first discharge time on condition that the main power source has been switched from off to on and the vehicle speed has reached at least a prescribed vehicle speed threshold value.

2. The vehicular driving device according to claim 1,
wherein the control device further includes a travel distance acquisition unit that acquires information indicating a travel distance of the electric vehicle and an elapsed time acquisition unit that acquires information indicating an elapsed time, and
the control device executes second discharge control for causing the pump to operate for a prescribed second discharge time on condition at least one of that the travel distance has reached at least a prescribed distance threshold value after an end of previous operation of the pump and that the elapsed time has reached at least a prescribed time threshold value after an end of previous operation of the pump.

3. The vehicular driving device according to claim 1,
wherein the control device further includes an oil temperature acquisition unit that acquires information indicating a temperature of oil in the case, and
the control device
sets the first discharge time longer as a temperature of oil decreases in a case where a temperature of oil is at least a prescribed oil temperature threshold value, and
prohibits operation of the pump in a case where a temperature of oil is lower than the oil temperature threshold value.

4. The vehicular driving device according to claim 1,
wherein the vehicle speed threshold value is set on a basis of the vehicle speed corresponding to a rotation speed of the rotor bearing, and
the first discharge time is set on a basis of a time until oil discharged from the pump reaches the rotor bearing via the oil supply passage.

5. The vehicular driving device according to any one of claims 1 to 4,
wherein a power transmission mechanism including a plurality of gears that mesh with each other and configured to transmit drive power generated by the rotary electric machine to the wheel is provided,
the rotor includes a rotor core and a rotor shaft, and
assuming that a direction in which the rotor shaft extends is an axial direction, one side in the axial direction is a first side in the axial direction, and another side in the axial direction is a second side in the axial direction,
a portion of the rotor shaft on the second side in the axial direction with respect to the rotor core is connected to the power transmission mechanism, and
the rotor bearing is configured to support a portion of the rotor shaft on the first side in the axial direction with respect to the rotor core.

6. The vehicular driving device according to claim 5,
wherein the oil supply passage is a first oil supply passage,
at least part of a plurality of the gears are configured to scrape up oil in the case, and
a second oil supply passage that supplies oil scraped up by the gears to the rotor bearing is provided.
